(19) **Europäisches Patentamt / European Patent Office / Office européen des brevets**

(11) **EP 2 270 679 B1**

(12) **FASCICULE DE BREVET EUROPEEN**

(45) Date de publication et mention
de la délivrance du brevet:
**11.03.2020 Bulletin 2020/11**

(51) Int Cl.:
***G06F 17/13*** *(2006.01)*     ***B64G 1/00*** *(2006.01)*
***G05B 13/04*** *(2006.01)*

(21) Numéro de dépôt: **10305701.4**

(22) Date de dépôt: **29.06.2010**

(54) **Procédé de contrôle optimal d'un système modélisable par des équations de Hamilton Jacobi Bellman**

Verfahren zur optimalen Steuerung eines mittels Hamilton-Jacobi-Bellman Gleichungen modellierbaren Systems

Method for optimal control of a system which can be modelled by Hamilton-Jacobi-Bellman equations

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **01.07.2009 FR 0954499**

(43) Date de publication de la demande:
**05.01.2011 Bulletin 2011/01**

(73) Titulaire: **CENTRE NATIONAL D'ETUDES SPATIALES**
**75001 Paris (FR)**

(72) Inventeurs:
• **Laurent-Varin, Julien**
 **91600, SAVIGNY SUR ORGE (FR)**
• **Zidani, Hasnaa**
 **75005, PARIS (FR)**
• **Cristiani, Emiliano**
 **00012, TIVOLI (RM) (IT)**
• **Bokanowski, Olivier**
 **75005, PARIS (FR)**

(74) Mandataire: **Delorme, Nicolas et al**
**Cabinet Germain & Maureau**
**12, rue Boileau**
**BP 6153**
**69466 Lyon Cedex 06 (FR)**

(56) Documents cités:
• Cristiani E et al: "An efficient data structure to solve front propagation problems and its application to the climbing problem" Diapositifs d'une présentation faite le 20 mai 2008 au Seminario di Modellistica Differenziale Numerica 20 mai 2008 (2008-05-20), XP002589011 Dipartimento di Matematica, Sapienza Università di Roma, Rome, Italie Extrait de l'Internet: URL:http://www.mat.uniroma1.it/ricerca/sem inari/mdn/PRESENTAZIONI/Cristiani08.pdf [extrait le 2010-06-24] -& Anonyme: "Index of /ricerca/seminari/mdn/PRESENTAZIONI" 24 juin 2010 (2010-06-24), XP002589012 Dipartimento di Matematica, Sapienza Università di Roma, Rome, Italie Extrait de l'Internet: URL:http://www.mat.uniroma1.it/ricerca/sem inari/mdn/PRESENTAZIONI/ [extrait le 2010-06-24] -& Anonyme: "Seminario di Modellistica Differenziale Numerica - Archivi 2007-2008" Page archivée par Internet Archive le 30 mai 2008 30 mai 2008
• Cristiani E et al: "An efficient data structure to solve front propagation problems" Abrégé d'une présentation faite le 26 mai 2008 au 39e Congrès National d'Analyse Numérique (CANUM 2008), 26-30 mai 2008, Saint Jean de Monts, France 26 mai 2008 (2008-05-26), XP002589014 Extrait de l'Internet: URL:http://smai.emath.fr/canum2008/resumes PDF/cristiani/Abstract.pdf [extrait le 2010-06-26]

- Bokanowski O et al: "An efficient data structure to solve front propagation problems" Preprint INRIA-00273977, version 1 16 avril 2008 (2008-04-16), XP002589015 Extrait de l'Internet: URL:http://hal.inria.fr/docs/00/27/39/77/P DF/Preprint.pdf [extrait le 2010-06-23]
- Anonyme: "INRIA Team Commands - Activity Report 2008" 2009, XP002589016 INRIA Extrait de l'Internet: URL:http://ralyx.inria.fr/2008/Raweb/comma nds/commands.pdf [extrait le 2010-06-24]
- Bokanowski O et al: "Minimum time control problems for non autonomous differential equations" Preprint HAL-00387803, version 1 25 mai 2009 (2009-05-25), XP002589017 Extrait de l'Internet: URL:http://hal.archives-ouvertes.fr/docs/0 0/38/78/03/PDF/R09006.pdf [extrait le 2010-06-24]
- Bokanowksi O et al: "An adaptative antidissipative method for optimal control problems" Rapport de Recherche INRIA N°5770 novembre 2005 (2005-11), XP002589018 Extrait de l'Internet: URL:http://hal.inria.fr/docs/00/07/02/50/P DF/RR-5770.pdf [extrait le 2010-06-24]
- TRÉLAT E: "Optimal control of a space shuttle, and numerical simulations" PROCEEDINGS OF THE FOURTH INTERNATIONAL CONFERENCE ON DYNAMICAL SYSTEMS AND DIFFERENTIAL EQUATIONS, 24-27 MAY 2002, WILMINGTON, NC, USA, 2003, pages 842-851, XP002589019
- BOKANOWSKI O ET AL: "Hamilton-Jacobi-Bellman approach for the climbing problem for multi-stage launchers" RESEARCH REPORT R09045 10 septembre 2009 (2009-09-10), XP002589020 LABORATOIRE JACQUES-LOUIS LIONS, UNIVERSITÉ PIERRE ET MARIE CURIE, PARIS, FRANCE Extrait de l'Internet: URL:http://www.ann.jussieu.fr/publications /2009/R09045.pdf [extrait le 2010-06-24] -& Anonyme: "Bibliographic data of Research Report R09045" 24 juin 2010 (2010-06-24), XP002589021 Laboratoire Jacques-Louis Lions, Université Pierre et Marie Curie, Paris, France Extrait de l'Internet: URL:http://www.ann.jussieu.fr/publications /2009/R09045.html [extrait le 2010-06-24]
- BOKANOWSKI O ET AL: "An Efficient Data Structure and Accurate Scheme to Solve Front Propagation Problems" JOURNAL OF SCIENTIFIC COMPUTING, vol. 42, no. 2, 6 octobre 2009 (2009-10-06), pages 251-273, XP019771495 ISSN: 1573-7691

**Description**

La présente invention concerne un procédé de contrôle optimal d'un système déterministe pour obtenir une trajectoire physique déterministe optimale *y* résolvant un problème P, le système pouvant être contrôlé par des commandes comprises dans un ensemble A, le comportement dynamique du système étant décrit par une fonction dynamique *f*, le problème P étant l'obtention d'une trajectoire physique déterministe optimale du système atteignant une cible C en un temps minimal $t_f$ et vérifiant des contraintes décrites par une fonction de contrainte mixte état/contrôle *g*, le procédé comprenant :

- une première étape de transposition du problème P en équations d'Hamilton Jacobi Bellman reliant un nombre entier d de variables d'état et leurs adjoints respectifs, d étant la dimension d'un espace d'état du système ;
- une deuxième étape de résolution numérique des équations d'Hamilton Jacobi Bellman en les discrétisant par un procédé anti-diffusif, dit « ultrabee » sur des grilles spatiales et temporelles représentant l'espace d'état et le temps.

Les procédés de contrôle optimal d'un système sont couramment employés pour gérer de manière optimale des stocks d'énergie, pour gérer les processus de production d'un produit... Ils sont encore typiquement utilisés pour simuler les performances d'un système lors de sa conception ou de sa mise au point, mais aussi pour analyser a priori ou a posteriori ou en temps réel les mesures obtenues du système afin par exemple de diagnostiquer un problème et de mener des actions correctives en tenant compte de contraintes, et plus généralement encore de contrôler en temps réel ou en temps réfléchi le système.
Le contrôle optimal d'un système implique la détermination de la trajectoire optimale du système. Une trajectoire se définit comme un ensemble de paramètres dites variables d'état, définissant l'état d'un système associé, évoluant en fonction du temps. Les procédés de contrôle optimal trouvent de nombreuses applications dans différents domaines industriels.
Dans le cas particulier de l'optimisation de la trajectoire d'un lanceur spatial, un problème particulier de contrôle optimal est l'atteinte d'une position orbitale donnée par un lanceur spatial emportant une charge utile, en minimisant la quantité de carburant utilisé et en respectant un certain nombre de contraintes comme par exemple la limitation de l'angle d'incidence du lanceur par rapport à l'atmosphère.
Pour optimiser la trajectoire d'un engin spatial ou d'un engin traversant l'atmosphère, il est généralement utilisé des méthodes que l'on peut classer en deux catégories.
La première catégorie de méthodes est la catégorie des méthodes dites directes. A partir d'une commande initiale, on calcule la sensibilité du système par rapport à chacune de ses commandes. Pour cela, on évalue l'état du système après avoir appliqué une variation sur chacune des commandes. Le procédé est répété jusqu'à obtenir un résultat répondant à un certain nombre de critères. Les méthodes directes présentent comme défaut une certaine perte de propriétés physiques mais surtout ne permettent d'obtenir qu'une solution localement optimale et souffrent de problèmes de stabilité.
La deuxième catégorie de méthodes est la catégorie des méthodes dites indirectes, basées sur la résolution du système d'optimalité (Principe de Pontryagin). Parmi ces méthodes, on peut notamment citer l'algorithme du Tir qui consiste à résoudre le système à deux bouts état/état adjoint par une méthode de type (quasi-)Newton. Les méthodes indirectes ne permettent toutefois d'obtenir qu'une solution localement optimale et nécessitent une connaissance a priori de la structure de la trajectoire.
Afin d'obtenir une trajectoire physique déterministe, globalement optimale sur l'ensemble du domaine calculé, sans connaissance a priori de ladite trajectoire, il est connu d'après le document « Solution of Hamilton Jacobi Bellman Equations, C.L. Navasca and A.J. Krener, Proceedings of tte 39th IEEE, Conférence on décision and control, Sydney Australlia December 200 » d'utiliser la transposition d'un problème de contrôle optimal d'un système régi par une fonction dynamique en équations d'Hamilton Jacobi Bellman. En particulier, il est connu que le problème du contrôle optimal d'un lanceur entre dans le champ d'un problème modélisable par des équations d'Hamilton Jacobi Bellman.
Pour résoudre numériquement les équations d'Hamilton Jacobi Bellman, il est également connu de discrétiser celles-ci en utilisant un procédé de discrétisation anti-diffusif. Un procédé de discrétisation est qualifié d'anti-diffusif si ce dernier n'engendre pas d'erreurs s'additionnant au cours du temps t ou lorsque les solutions s'éloignent de la cible C. Le procédé « Ultra Bee », tel que décrit par exemple dans les documents connus « O. Bokanowski and H. Zidani. Anti-diffusive schemes for linear advection and application to Hamilton-Jacobi-Bellman équations. Journal Scientific Computing, 30(1):1-33, 2007» et «O. Bokanowski, S. Martin, R. Munos, and H. Zidani. An anti-diffusive scheme for viability problems. Applied Numer Math, 56(9) :1147-1162, 2006», est bien adapté à la discrétisation des équations d'Hamilton Jacobi Bellman.
Le document "An efficient data structure to solve front propagation problems and its application to the climbing problem", Cristiani E et al., Diapositifs d'une présentation faite le 20 mai 2008 au Seminario di Modellistica Differenziale Numerica, décrit une photographie du lanceur Ariane V et une représentation plane d'une orbite finale à atteindre par une charge utile, le problème général d'optimisation appliqué au lanceur et fait un bilan des variables dynamiques et cinématiques qui sont impliquées dan ce problème. Le document décrit aussi un modèle simplifié du problème général d'optimisation.

L'invention a pour but de proposer un procédé de contrôle optimal d'un système permettant notamment d'obtenir une trajectoire, physique en termes d'évolution temporelle de variables d'état correspondant à des grandeurs physique, déterministe, globalement optimale sur l'ensemble du domaine calculé sans connaissance a priori de la structure de ladite trajectoire, et nécessitant une puissance de calcul compatible avec une application en termes de capacité de mémoire et de temps de calcul permettant d'analyser et/ou contrôler ledit système en quasi temps réel.

A cet effet, l'invention a pour objet un procédé de contrôle optimal d'un système du type précité, caractérisé en ce qu'il comprend une troisième étape d'implémentation des grilles par des structures de données creuses, une quatrième étape de calcul de la fonction de temps minimal, une cinquième étape où à partir des valeurs obtenues à la quatrième étape est reconstruite une trajectoire optimale.

Suivant des modes particuliers de réalisation, le procédé selon l'invention comporte l'une ou plusieurs des caractéristiques suivantes :

- les grilles sont incluses dans un domaine fini $[0,T] \times B$ avec T une borne supérieure du temps nécessaire pour atteindre la cible C et B un ensemble des points comprenant tout à la fois la cible C et la position initiale du système,
- la quatrième étape est une étape de calcul simultané de la fonction de temps minimal et d'un bassin de capture,
- les grilles spatiales et/ou temporelles sont à pas variables,
- le pas temporel entre deux temps d'échantillonnage successifs diminue dans des zones de l'espace d'état où les variations de certaines variables d'état sont importantes,
- les pas spatiaux correspondant au maillage d'une grille de l'espace d'état sont uniformes indépendamment du temps, des changements de variable ayant été effectués au préalable sur au moins une variable d'état de manière à prendre en compte des différences d'échelles locales importantes pour certaines variables d'état considérées à des instant différents,
- les structures creuses sont des structures creuses à listes chaînées,
- les structures creuses à listes chaînées sont des structures creuses à listes chaînées semi-dynamiques obtenues à partir d'une grille pleine (M) de dimension $N^d$, d étant la dimension d de l'espace d'état, et N le nombre d'échantillons sur un axe quelconque représentant une variable d'état, une structure creuse à listes chaînées semi-dynamique comprenant une matrice de dimension $N^{d-1}$ de pointeurs, chaque pointeur étant le début d'une liste de parcours de la dernière dimension restante de la matrice pleine M, et contenant tous les nœuds entourant un front solution calculé à la deuxième étape,
- la dimension de l'espace des variables d'états est comprise entre 2 et 7, de préférence comprise entre 2 et 4,
- la trajectoire optimale et la fonction de contrôle optimale $\alpha^*(.)$ sont construites grâce à un procédé Runge-Kutta du quatrième ordre,
- le procédé décrit ci-dessus est appliqué au contrôle d'un lanceur spatial,
- les variables d'état du procédé appliqué au contrôle d'un lanceur spatial sont la distance r entre le centre gravité du lanceur et le centre de la Terre, v la vitesse relative du lanceur par rapport à un repère lié à la Terre, l'angle d'inclinaison $\gamma$ de la vitesse relative par rapport à une horizontale locale terrestre et la masse m,
- la fonction de contrainte mixte état/contrôle *g* est déterminée à partir de la contrainte physique régie par l'équation :

$$Q(r,v)|\alpha| \leq C_s$$

avec $Q(r,v) = \frac{1}{2}\rho(r)v^2$, où $\rho$ est la fonction décrivant la densité atmosphérique en fonction de la distance r et $\alpha$ désigne un angle d'incidence formé par la direction du vecteur de vitesse relative v et le vecteur d'un axe longitudinal du lanceur,
- le domaine de calcul fini $[0,T] \times B$ est restreint par un bornage supplémentaire artificiel des points $(r, v, \gamma)$ appartenant à B, en utilisant un ensemble fini d'inéquations de type: h_1(r,v,$\gamma$)<=0, .... h_q(r,v,$\gamma$)<=0 dans lequel f_i(r, v, $\gamma$) sont des fonctions des variables d'état r, v, $\gamma$ pour i entier variant de 1 à q,
- un front solution délimitant le bassin de capture est stocké dans une structure de donnée creuse à listes chaînées semi-dynamique.

L'invention sera mieux comprise à la lecture de la description qui va suivre, donnée uniquement à titre d'exemple et faite en se référant aux dessins, sur lesquels :

- la figure 1 est un synoptique des étapes du procédé de contrôle optimal selon l'invention,
- la figure 2 est une vue d'une structure de données implémentant des grilles de stockage des solutions selon l'invention des équations de Hamilton Jacobi Bellman dans le cas d'une dimension d de l'espace d'état égale à 2,
- la figure 3 est une vue d'une structure de données des grilles de stockage des solutions selon l'invention des équations de Hamilton Jacobi Bellman dans le cas d'une dimension d de l'espace d'état égale à 3,
- la figure 4 est une représentation du repère dans lequel un problème d'optimisation d'un lanceur spatial est posé,
- la figure 5 est une vue des angles $\alpha$ et $\gamma$ utilisés dans le problème d'optimisation.

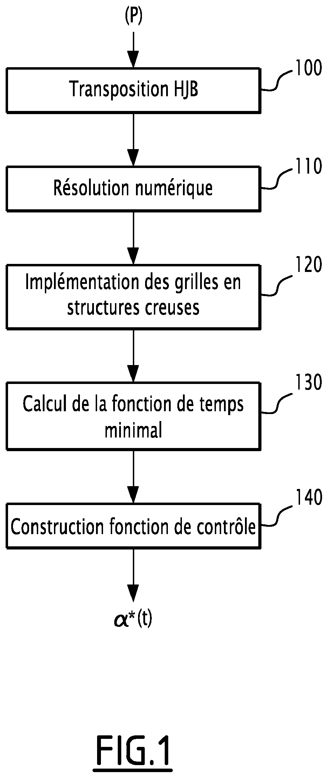

Comme illustré sur la figure 1, dans une première étape 100 du procédé selon l'invention, un problème P de contrôle optimal d'un système est modélisé à l'aide des équations d'Hamilton Jacobi Bellman.

L'état du système est décrit par un ensemble comprenant un nombre entier strictement positif d de variables d'état. Les variables d'état permettent de décrire à un temps t donné les paramètres physiques du système, comme par exemple sa position, sa vitesse, sa masse, sa température. En particulier, à un temps initial $t = 0$, la valeur des variables d'état définit une position initiale $x \in \mathbb{R}^d$. A partir de la position initiale $x$, l'évolution de l'ensemble des variables d'état au fil du temps $t$ décrit une trajectoire $y_x$.

Le système est contrôlé grâce à un nombre entier strictement positif m de commandes formant un ensemble A. Les commandes reçues par le système sont traitées par ce dernier et modifient son comportement. La fonction de contrôle $\alpha(t)$ décrit les commandes envoyées au système en fonction du temps $t$. A ce titre, une commande est susceptible, directement ou indirectement, de modifier au cours du temps l'état du système. Par exemple, le système peut recevoir une commande modifiant la quantité de carburant alimentant un de ses moteurs, ce qui augmente sa vitesse et réduit sa masse. Le comportement dynamique du système, c'est-à-dire l'évolution au cours du temps $t$ des variables d'état du système en fonction des commandes reçues par ce dernier, est modélisé par une fonction dynamique

$$f : \mathbb{R}_+ \times \mathbb{R}^d \times A \to \mathbb{R}^d.$$

Le système doit en outre répondre à un certain nombre de contraintes sur l'état du système ou sur les commandes reçues, comme par exemple une contrainte de vitesse à ne pas dépasser, ou encore une contrainte de quantité maximale de carburant à utiliser sur une plage de temps donnée. Les contraintes sont modélisées par une fonction de contrainte mixte état/contrôle $g : \mathbb{R}^d \times A \to \mathbb{R}$.

On souhaite contrôler le système de sorte que les variables d'état de ce dernier atteignent des valeurs comprises dans une cible $C \subset \mathbb{R}^d$, en un temps minimal $t_f$. Par exemple, on souhaite déterminer l'ensemble des commandes permettant au système d'atteindre un point donné en consommant une quantité de carburant inférieure à une valeur prédéterminée en un temps donné.

In fine, le procédé selon l'invention permet d'établir une fonction de contrôle optimale $\alpha^*(t)$ qui pour chaque instant t décrit une trajectoire $y_x$ optimale et respectant les contraintes décrites par la fonction g, permettant d'atteindre une cible $C \subset \mathbb{R}^d$, en un temps minimal $t_f$.

En posant une fonction temps minimum T qui associe pour la position initiale $x \in \mathbb{R}^d$ le temps minimal nécessaire $t_f$ pour atteindre la cible C avec une trajectoire $y_x$ admissible obéissant à la contrainte état/contrôle g, le problème P de contrôle optimal, fonction du temps t, peut être décrit ainsi :

$$(1) \quad (P) \begin{cases} \mathrm{T}(x) := \text{minimiser } t_f, \\ avec \begin{cases} \dot{y}_x(t) = f(t_f - t, y_x(t), \alpha(t)), t \in [0, T], \\ y_x(0) = x, \end{cases} \\ t_f \geq 0, \alpha(t) \in A \ pour\ tout\ t \in [0, T], \\ y_x(t_f) \in C, g(y_x(t), \alpha(t)) \leq 0 \ pour\ tout\ t \in [0, T] \end{cases}$$

avec $\dot{y}_x$ dérivée de la trajectoire $y_x$ par rapport au temps t.

Le problème P est transposé en équations d'Hamilton Jacobi Bellman sous la forme suivante :

$$(2) \quad \begin{cases} \vartheta_t(t,x) + \max_{a \in A, g(x,a) \le 0} \left\{ -f(t,x,a).\nabla_x \vartheta(t,x) \right\} = 0 \\ \vartheta(0,x) = \Phi(x) \end{cases}$$

en ayant posé :

- 

$$\Phi(y) = \begin{cases} 0\, si\ y \in C \\ 1\ sinon \end{cases},$$

et ;

- 

$$\begin{cases} \vartheta(t,x) := \text{minimiser}\, \Phi(y_x(t)) \\ avec \begin{cases} \dot{y}_x(s) = f(t-s,\ y_x(s),\ \alpha(s)), s \in [0,t], \\ y_x(0) = x, \end{cases} \\ \alpha(s) \in A\ pour\ tout\ s \in [0,t], \\ g(y_x(s), \alpha(s)) \le 0\ pour\ tout\ s \in [0,t] \end{cases}$$

Dans les équations (2), $\vartheta_t$ est la notation représentant la dérivée par rapport au temps de la fonction $\vartheta$, $\nabla_x \vartheta$ est la notation représentant le gradient de la fonction $\vartheta$ par rapport à la variable $x$.

La fonction $\vartheta(t, x)$ est une fonction dite d'accessibilité qui prend une valeur nulle s'il existe une trajectoire $y_x$ qui atteint la cible $C$ avant un temps t en partant de la position initiale $x$, et qui prend une valeur de 1 dans tous les autres cas. L'ensemble $\Omega_t := \left\{ x \in \Re^d \,\middle|\, \vartheta(t,x) = 0 \right\}$ est appelé bassin de capture $\Omega_t$ du problème P. Au bassin de capture $\Omega_t$ correspond un front $\Gamma_t$.

La fonction $\vartheta$ satisfait le principe de la programmation dynamique. La fonction $\vartheta$ est en outre l'unique fonction semi-continue inférieurement des équations d' Hamilton Jacobi Bellman.

Le procédé selon l'invention s'applique aux problèmes P du système pour lesquels la fonction de contrainte g est choisie de sorte que g est une fonction continue et pour tout $x \in \Re^d$, l'ensemble $\{g(x,\alpha)\alpha \in A,\ et\ g(x,\alpha) \le 0\}$ est fermé et non vide.

Dans une deuxième étape 110 du procédé selon l'invention, la fonction $\vartheta$ est déterminée en résolvant numériquement les équations (2) d'Hamilton Jacobi Bellman telles que définies au cours de la première étape 100. La fonction $\vartheta$ ne pouvant prendre que les valeurs 0 et 1, sa détermination permet d'aboutir au front $\Gamma_t$ qui encadre le bassin de capture $\Omega_t$. La résolution numérique des équations (2) n'est donc effectuée que localement autour du front $\Gamma_t$.

De plus, au cours de cette étape 110, afin de minimiser le temps de calcul, la résolution des équations (2) d'Hamilton Jacobi Bellman est restreinte à un domaine fini $[0,T] \times B$ avec T une borne supérieure du temps nécessaire pour atteindre la cible C et B un ensemble de points comprenant tout à la fois la cible C et la position initiale $x$ du système. La borne supérieure T et l'ensemble B sont choisis de sorte à tenir compte des réalités physiques s'appliquant au système.

Le domaine de calcul est réduit par exemple par la prise en compte de contraintes physiques rédhibitoires.

Le domaine de calcul est réduit encore sans préjudice de la restriction du domaine de calcul pour des raisons physiques par une fonction de contrainte artificielle venant encadrer les variables d'état.

La restriction du domaine de calcul permet d'économiser de la mémoire et de diminuer le temps de calcul.

Dans l'étape 110, les équations (2) d'Hamilton Jacobi Bellman sont résolues numériquement. Celles-ci sont discrétisées en utilisant un procédé de discrétisation anti-diffusif. Un procédé de discrétisation est qualifié d'anti-diffusif si ce dernier n'engendre pas d'erreurs s'additionnant au cours du temps t ou lorsque les solutions s'éloignent de la cible C. Le procédé « Ultra Bee », tel que décrit par exemple dans les documents « O. Bokanowski and H. Zidani. Anti-diffusive schemes for linear advection and application to Hamilton-Jacobi-Bellman équations. Journal Scientific Computing, 30(1):1-33, 2007» et «O. Bokanowski, S. Martin, R. Munos, and H. Zidani. An anti-diffusive scheme for viability problems.

Applied Numer Math, 56(9) :1147-1162, 2006», est bien adapté à la discrétisation des équations (2) d'Hamilton Jacobi Bellman.

A mesure de l'obtention des valeurs que prend la fonction solution $\vartheta$, des grilles spatiales et temporelles représentant l'espace d'état et le temps sont implémentées dans une étape 120 sous la forme d'une structure de données efficace en termes de mémoire de stockage, de performance d'écriture et d'accès aux données, et apte à stocker la fonction solution sous la forme d'un front de capture et de son voisinage immédiat.

Il est à remarquer que les grilles spatiales et/ou temporelles peuvent être de manière générale à pas variables.

De manière préférée, le pas temporel entre deux temps d'échantillonnage successifs diminue dans des zones de l'espace d'état où les variations de certaines variables d'état sont importantes.

De manière préférée, les pas spatiaux correspondant au maillage d'une grille de l'espace d'état sont uniformes indépendamment du temps, des changements de variable ayant été effectués au préalable sur au moins une variables d'état de manière à prendre en compte des différences d'échelles locales importantes pour certaines variables d'état considérées à des instants différents.

La structure de données est une structure creuse adaptée pour le stockage d'un front discret.

Dans une étape suivante 130, la fonction temps minimale et le bassin de capture est calculé.

Dans une cinquième étape 140 du procédé selon l'invention, la fonction de contrôle optimal $\alpha^*(.)$ est reconstruite à partir de la connaissance de la fonction $\vartheta$. Le document « M. Bardi and I. Capuzzo-Dolcetta. Optimal Control and viscosity solutions of Hamilton-Jacobi-Bellman équations. Birkhäuser Boston, 1997. » illustre un tel exemple de reconstruction de la fonction de contrôle optimal $\alpha^*(t)$.

Cette fonction de contrôle optimale $\alpha^*(t)$ est appliquée sur le système en quasi temps réel.

Suivant les figures respectives 2 et 3, une structure creuse préférée de l'invention désignée par « structure creuse semi-dynamique » SSD (dénomination en anglais de Sparse Semi-Dynamic data structure), est représentée pour la dimension $d$ égale à 2, respectivement égale à 3.

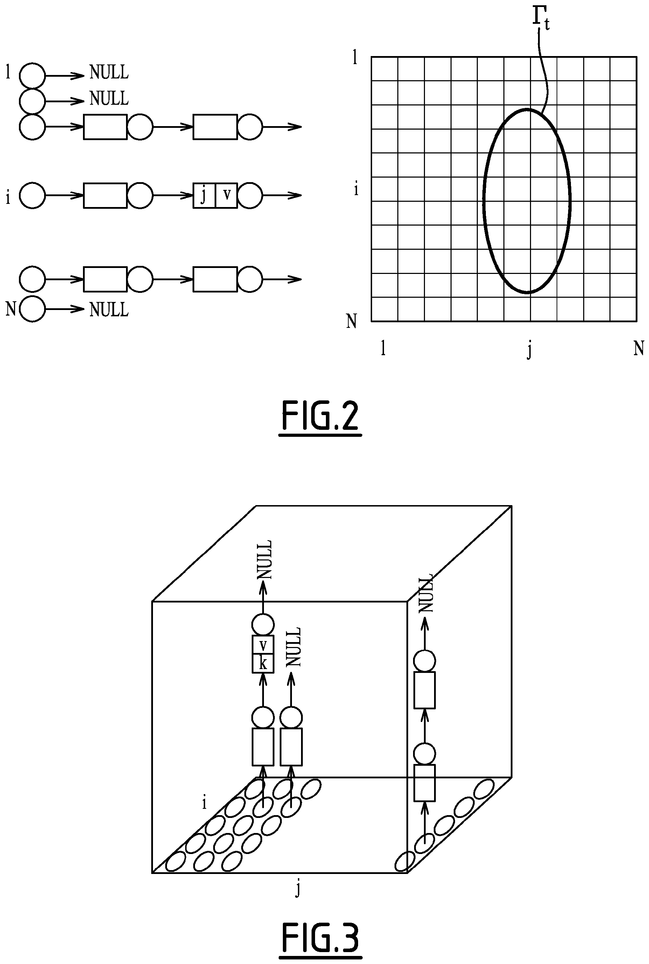

Suivant la figure 2, un domaine carré est considéré dans lequel le calcul est effectué. Dans le carré est représenté en trait plein un front d'onde en forme d'ellipse. La matrice de calcul carrée supposée de dimension NxN et désignée par M comprend des éléments repérés par un premier indice i et un deuxième indice j. Un vecteur (statique) de pointeurs est désigné par p = (p$_1$, ..., p$_N$) de sorte que chaque pointeur p$_i$ est le début d'une liste chainée qui correspond à la ligne d'indice i de la matrice M. Chaque liste chainée est constituée d'éléments qui contiennent seulement les indices j et les valeurs des nœuds dont le stockage est souhaité dans la structure (c'est-à-dire les nœuds situées autour du front $\Gamma_t$). Les éléments de la liste sont ordonnés par ordre croissant des indices i triés. Il est à remarquer le fait que, si une ligne paramétrée par l'indice i ne contient aucun nœud autour du front $\Gamma_t$, le pointeur correspondant pointe sur une référence neutre désigné par NULL. De cette manière seuls les nœuds qui sont intéressants sont stockés et permettent un accès simultané à chaque ligne de la matrice, de sorte que les voisins d'un nœud donné peuvent être rapidement est facilement recherchés.

Dans la version en dimension quelconque $d$ de l'algorithme de stockage dans une structure de donnée creuse semi-dynamique, la matrice complète M qui n'est pas stockée comporte N$^d$ éléments. Dans ce cas, une matrice de dimension N$^{d-1}$ de pointeurs est considérée. Comme pour le cas précédent où $d$ égal à 2, chaque pointeur est le début d'une liste qui s'étend parallèlement à la dernière dimension restante de la matrice M, contenant tous les nœuds entourant le front. Il est à remarquer que dans la méthode de structure creuse chainée semi-dynamique (SSD) chaque élément des listes comprend seulement un champ de dernier indice restant et de valeur de la fonction $\vartheta$. Les premiers d-1 indices de départ peuvent être retrouvés par le pointeur en cours d'utilisation pour parcourir la structure.

Il est à remarquer que dans le cas $d$ égal à 2, cette structure de données (SSD) correspond à une version dynamique de la méthode dite CRS (dénomination en anglaise de Compressed Row Storage) qui fournit également une structure creuse.

Avantageusement, en ayant remplacé des vecteurs statiques comme utilisés dans la méthode CRS par des listes chainées, il est possible de modifier le pas du maillage temporel de la grille lorsque cela est utile à la résolution des équations HJB (2).

Suivant la figure 3 correspondant à la dimension $d$ égal à 3, pour un couple d'indices quelconque (i, j), une liste est stockée correspondant aux indices k pertinents. A l'inverse, la méthode CRS (dénomination anglaise de Compressed Row Structure), pour un indice quelconque i, une liste est stockée correspondant aux indices (j, k).

En variante de la méthode de stockage en des grilles creuses à listes chainées semi-dynamiques (SSD), une méthode de stockage légèrement différente permet d'économiser de la mémoire, fondée sur l'idée de base que dans la structure à deux dimensions il n'est pas nécessaire de stocker des pointeurs qui pointent à la référence neutre NULL. Dans ce cas, au vecteur contenant les pointeurs est substituée une liste chainée similaire à celles contenant les valeurs des nœuds. Cette modification conduit à un codage numérique plus complexe. Il a été vérifié expérimentalement que le temps CPU (Computer Program Unit) est diminué pour $d$ égal à 2 mais pas toujours dans le cas d'une dimension supérieure.

Une structure de données creuse à listes chainées semi-dynamique présente le meilleur compromis en termes de capacité de stockage et de temps de calcul pour des procédés de contrôle selon l'invention opérant dans un espace d'état de dimension $\underline{d}$ comprise entre 2 et 7. La valeur limite 7 correspond à la limite technologique actuelle des processeurs actuellement sur le marché ou en cours de développement.

En variante, une structure creuse est par exemple une structure de type LS (dénomination anglaise de List Storage) ou une structure de type classique CRS. Cette structure présente de bonne performance en termes de capacité mémoire mais requiert des temps de calcul plus importants que ceux présentés pour une structure SSD lorsque $\underline{d}$ est supérieur ou égal à 3.

Dans le cas d'une structure de données creuse de type LS (dénomination anglaise de List Storage), une liste à chainage dynamique d'éléments est stockée contenant les indices et les valeurs des nœuds entourant le front, les éléments étant ordonnés d'une manière appropriée par rapport à la matrice pleine qui n'est pas stockée. Chaque élément de la liste comprend un pointeur sur l'élément précédent et l'élément suivant, de sorte que la recherche des voisins est faite en aller et en retour dans la liste. En outre, en dimension 2, les indices (i, j) d'un nœud sont compressés ou codés en un seul indice k pour économiser de la mémoire, k étant défini selon la règle k = i.N+j où N est le nombre de colonnes de la matrice. Cette procédure de compression est facilement généralisable à une dimension quelconque, pour peu que N et $\underline{d}$ ne soient pas trop grands (sous peine que l'entier k vienne à manquer de ressources en bits de codage). Cette méthode est la meilleure en termes d'allocation de taille de mémoire.

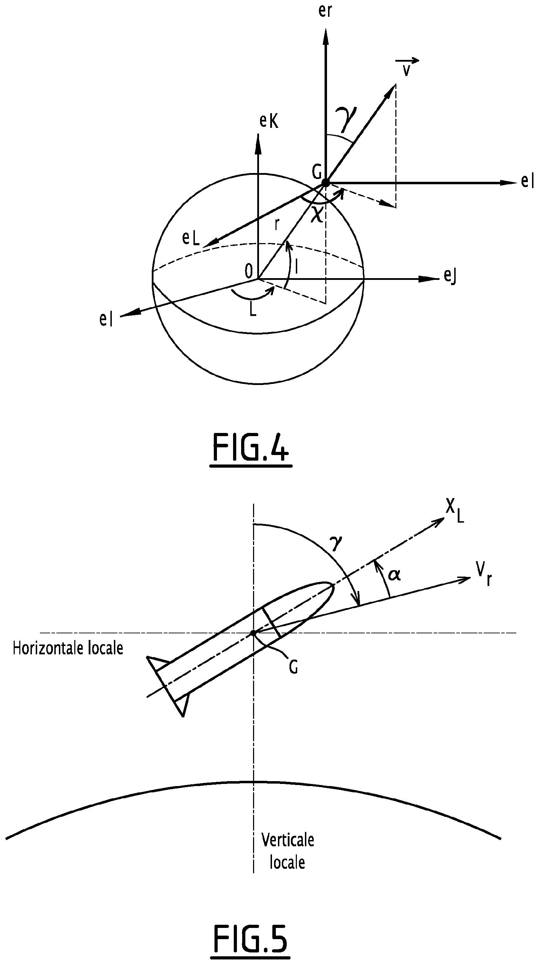

A titre d'exemple non limitatif, le procédé selon l'invention peut être utilisé pour optimiser la trajectoire d'un lanceur spatial. Le lanceur comporte deux boosters, un premier étage et un dernier étage. Ces éléments sont conçus de sorte à contenir un combustible. L'état du lanceur peut être décrit par trois variables d'état : l'altitude r du lanceur, sa vitesse v, et sa masse m. Comme représenté sur la figure 4, le centre de la Terre est noté O, $e_K$ est l'axe Nord-Sud de rotation de la terre, et $\Omega$ est le module constant de la vitesse angulaire de rotation de la Terre orienté selon $e_K$. On définit ainsi un référentiel R := ($e_I$, $e_J$, $e_K$) quasi-inertiel centré sur O tournant autour de $e_K$ à la vitesse angulaire $\Omega$, avec $e_k$ choisi de sorte à entrer en intersection avec le méridien de Greenwich.

Le lanceur a un centre de masse G dont les coordonnées sphériques sont (r, L, l) avec r la distance au centre de la terre O, L est la longitude et l la latitude. Un repère mobile $R_1$ est centré sur G et défini de sorte à ce que $e_r$ soit la direction verticale au point G et ($e_L$, $e_l$) soit le plan local horizontal avec $e_l$ s'étalant dans le plan ($e_r$, $e_K$) et pointant vers le nord. La vitesse relative de G dans R est décrite par un vecteur $\vec{v}$ de module v et paramétré par deux angles : d'une part l'inclinaison de la trajectoire $\gamma$ qui est l'angle entre $e_r$ et $\vec{v}$ et d'autre part l'azimut $\chi$ qui est l'angle entre $e\vec{v}$ sur ($e_L$, $e_l$).

Le lanceur est soumis à la force de Coriolis et à la force de gravitation $\vec{g}$ = -g(r)$e_r$ avec $g(r) := \dfrac{\mu}{r^2}$, $\mu$ étant la constante gravitationnelle.

Le lanceur subit une force aérodynamique $\vec{F}_D$ opposée à la vitesse $\vec{v}$. Le lanceur est contrôlé par sa force de poussée $\vec{F}_T$.

La masse m évolue au cours du temps t. En particulier, dans le cas d'un lanceur à étages, la masse m(t) subit des variations non continues du fait de la séparation au cours du vol des différents étages.

Les commandes du lanceur permettent d'ajuster, au cours du temps, la puissance fournie par chaque moteur du système. Les commandes permettent donc de modifier la force de poussée $\vec{F}_T$. La fonction de contrôle $\alpha(t)$ décrit pour chaque instant t la puissance des moteurs actifs.

L'optimisation de la fonction de contrôle $\alpha(t)$ consiste à trouver la fonction de contrôle optimale $\alpha^*(t)$ permettant de minimiser la consommation de carburant sous contrainte de la pression dynamique pour atteindre une orbite géostationnaire.

Par souci de clarté et de simplification, il est par la suite pris l'hypothèse simplificatrice que le plan de mouvement du lanceur est le plan équatorial, et que les forces de poussée $\vec{F}_T$ et aérodynamique $\vec{F}_D$ sont comprises dans le même plan. Il est aussi pris pour hypothèse que l'évolution de ($r,v,\gamma,m$) ne dépend pas de la longitude L. Cette simplification est acceptable car physiquement réaliste dans le cas de lanceurs spatiaux tirés depuis un site proche de l'équateur vers une orbite géostationnaire. Toutefois, le procédé selon l'invention permettrait également de résoudre le problème sans cette hypothèse.

Une étude du présent système aboutit aux systèmes d'équations suivantes, c'est-à-dire la fonction dynamique f du lanceur :

$$\frac{dr}{dt} = v \cos \gamma;$$

$$\frac{dv}{dt} = -g(r)\cos\gamma - \frac{F_D(r,v)}{m(t)} + \frac{F_T(r,v)}{m(t)}\cos\alpha + \Omega^2 r \cos\gamma$$

$$\frac{d\gamma}{dt} = \sin\gamma\left(\frac{g(r)}{v} - \frac{v}{r}\right) - \frac{F_T}{vm(t)}\sin\alpha - \Omega^2\frac{r}{v}\sin\gamma - 2\Omega$$

Ici, a désigne l'angle d'incidence formé par le vecteur de vitesse relative v dans R du centre G lanceur et XL le vecteur d'axe longitudinal du lanceur. L'angle $\alpha$ et les vecteurs permettant de le définir représentés sur la figure 5.

Le problème P à résoudre est de guider le lanceur depuis une position initiale $(r_0, v_0, \gamma_0)$ vers une cible C située sur l'orbite géostationnaire en minimisant la consommation de combustible. La contrainte mixte état/contrôle permettant de définir g est la suivante pour le lanceur :

$$Q(r,v)|\alpha| \le C_s$$

avec $Q(r,v) = \frac{1}{2}\rho(r)v^2$ , $\rho$ étant la fonction décrivant la densité atmosphérique et $C_s$ une constante prédéterminée.

La masse m(t) du lanceur à étages multiples est égale à la somme :

- de la masse de la charge utile $M_{PL}$, ladite masse étant constante au fil du temps ;
- de la masse à vide du lanceur $M_L(t)$, c'est-à-dire de la masse du lanceur sans combustible, elle-même égale à la somme de la masse $M_{E1}$ du premier étage du lanceur sans combustible, de la masse $M_{E2}$ du deuxième étage du lanceur sans combustible et $M_{EAP}$ de la masse des boosters du lanceur sans combustible ;
- de la masse de combustible $M_P$, elle-même égale à la somme de la masse $m_1$ de combustible compris dans les boosters du lanceur, de la masse $m_2$ de combustible compris dans le premier étage du lanceur et de la masse $m_3$ de combustible compris dans le dernier étage du lanceur.

En résumé, $m(t) := M_{PL} + M_L(t) + m_1(t) + m_2(t) + m_3(t)$.

La variation de la masse m(t) dépend de la phase de vol du lanceur. Le vol du lanceur connaît quatre phases :

- La phase 0, à partir de l'instant initial 0, de décollage durant laquelle les deux boosters et le premier étage sont allumés ;
- La phase 1, lors de laquelle les deux boosters et le premier étage sont maintenus allumés, et s'achevant à un instant $t_2$ où les boosters se séparent du lanceur;
- La phase 2, à partir de l'instant $t_2$ et s'achevant à un instant $t_3$ où le premier étage est séparé du lanceur, pendant laquelle le lanceur est propulsé seulement par le premier étage;
- La phase 3 finale, à partir de l'instant $t_3$ jusqu'à un temps final $t_f$ où seul le deuxième étage est allumé.

En posant $\beta_{EAP}$ le taux d'évolution dans le temps de la masse des boosters, $\beta_{E1}$ le taux d'évolution dans le temps de la masse du premier étage et $\beta_{E2}$ le taux d'évolution dans le temps de la masse du deuxième étage, et en posant la condition finale $m(t_f) = M_{PL} + M_{E2}$, la masse m(t) du lanceur peut être définie ainsi :

$$m(t) = \begin{cases} M_{PL} + M_{E2} + \beta_{E2}(t_f - t) \; pour \, t \in \left[t_f - t_3, t_f\right] \\[2em] M_{PL} + M_{E2} + \beta_{E2}t_3 + M_{E1} + \beta_{E1}(t_f - t_3 - t) \, pour \, t \in \left[t_f - t_3 - t_2, t_f - t_3\right] \\[2em] M_{PL} + M_{E2} + \beta_{E2}t_3 + M_{E1} + \beta_{E1}t_2 + M_{EAP} + (\beta_{EAP} + \beta_{E1})(t_f - t_3 - t_2 - t) \\[1em] pour \, t \in \left[0, t_f - t_3 - t_2\right] \end{cases}$$

Le lanceur comporte une quantité maximale de combustible supposée constante, fonction de la forme du lanceur et de la capacité de ses éléments constitutifs.

L'évolution de masse m dépend donc seulement du temps final $t_f$ de la trajectoire.

- En définissant une fonction $\tilde{m}$ de sorte que $m(t) = \tilde{m}(t_f - t)$, et l'ensemble des valeurs de contrôle admissibles du système $A = [\alpha_{min}, \alpha_{max}]$, le problème P associé de la trajectoire optimale du lanceur tel que décrit précédemment s'écrit ainsi :

$$
\left\{
\begin{array}{l}
\text{minimiser } t_f \\[2mm]
\dfrac{dr}{dt} = v \cos \gamma; \\[4mm]
\dfrac{dv}{dt} = -g(r)\cos\gamma - \dfrac{F_D(r,v)}{\tilde{m}(t_f - t)} + \dfrac{F_T(r,v)}{v\tilde{m}(t_f - t)}\cos\alpha + \Omega^2 r \cos\gamma \\[4mm]
\dfrac{d\gamma}{dt} = \sin\gamma\left(\dfrac{g(r)}{v} - \dfrac{v}{r}\right) - \dfrac{F_T(r,v)}{v\tilde{m}(t_f - t)}\sin\alpha - \Omega^2\dfrac{r}{v}\sin\gamma - 2\Omega \\[4mm]
r(0) = r_0, v(0) = v_0, \gamma(0) = \gamma_0, \\[2mm]
\alpha(t) \in [\alpha_{min}, \alpha_{max}] \; pour \; t \in \left[0, t_f\right], \\[2mm]
(r(t_f), v(t_f), \gamma(t_f)) \in C, \\[2mm]
Q(r,v)|\alpha| \le C_S \; pour \; t \in \left[0, t_f\right]
\end{array}
\right.
$$

Le problème P ainsi formulé ne fait pas apparaître la masse m(t) en tant que variable d'état, mais comme une fonction du temps final $t_f$ qui n'est pas connu.

Le procédé selon l'invention permet de trouver la fonction de contrôle optimale $\alpha^*(.)$ du problème P ainsi formulé.

Dans la première étape 110, on transpose le problème P en équations (2) de Hamilton Jacobi Bellman sous la forme suivante :

$$
\left\{
\begin{array}{l}
\vartheta_t(t,x) + \underset{a \in A, g(x,a) \le 0}{H}(t, x, \nabla_x \vartheta(t,x))) = 0, t > 0, x = (r,v,\gamma) \in \Re^3, \\[3mm]
\vartheta(0,x) = \Phi(x), x = (r,v,\gamma) \in \Re^3
\end{array}
\right.
$$

en posant p1, p2, p3 les adjoints respectifs des variables d'état r, v et $\gamma$,

$H(t,r,v,\gamma,p_1,p_2,p_3) :=$

$$
\max_{\substack{a \in [\alpha_{min}, \alpha_{max}], \\ Q(r,v)|\alpha| \le C_S}}
\left\{
\begin{array}{l}
p_1 v \cos\gamma + \\[3mm]
p_2\left(-g(r)\cos\gamma - \dfrac{F_D(r,v)}{\tilde{m}(t_f - t)} + \dfrac{F_T(r,v)}{v\tilde{m}(t_f - t)}\cos\alpha + \Omega^2 r \cos\gamma\right) + \\[4mm]
p_3\left(\sin\gamma\left(\dfrac{g(r)}{v} - \dfrac{v}{r}\right) - \dfrac{F_T(r,v)}{v\tilde{m}(t_f - t)}\sin\alpha - \Omega^2\dfrac{r}{v}\sin\gamma - 2\Omega\right)
\end{array}
\right\} .
$$

Le problème P ainsi transposé en équations (2) de Hamilton Jacobi Bellman peut être vu comme un problème de propagation d'un front dans l'espace $(r,v,\gamma)$ dans lequel le front initial au temps t=0 est la cible C, à savoir l'orbite géostationnaire. Le front, au temps t, correspond à l'ensemble de points qui permettent au lanceur d'atteindre la cible C en un temps t, mais pas avant.

Puis dans la deuxième étape 110 du procédé selon l'invention, la fonction $\vartheta$ est résolue numériquement. La résolution des équations (2) d'Hamilton Jacobi Bellman est restreinte au domaine fini $[0,T] \times B$, étant rappelé que T est la borne supérieure du temps nécessaire pour atteindre la cible C et B l'ensemble des points comprenant tout à la fois la cible C et la position initiale $(r_0, v_0, \gamma_0)$ du lanceur.

Les équations (2) Hamilton Jacobi Bellman sont discrétisées sur le domaine fini $[0,T] \times B$. Pour cela on utilise une grille G sur l'ensemble B de maillage$(\Delta r, \Delta v, \Delta \gamma)$. Pour chaque temps $t_n$, et chaque nœud $x_j \in G$, on calcule numériquement une approximation $V_j^n$ de $\vartheta(t_n, x_j)$, en utilisant la formule ci-dessous :

$$\frac{V_j^{n+1} - V_j^n}{\Delta t_n} + \max_{a \in A_{Na}, g(x_j,a) \le 0} \left\{ f(t_n, x_j, a).[DV^n] \right\} = 0$$

$$V_j^0 = \Phi(x_j)$$

Avec

- $A_{Na}$ est un ensemble fini de $N_a$ éléments de l'ensemble A, $N_a > 0$;
- $[DV^n]$ est une approximation du gradient $\nabla_x \vartheta(t,x)$.

$\Delta t_n$ est un intervalle temporel qui peut être variable. Pour des raisons de stabilité, l'intervalle temporel $\Delta t_n$ et la grille G doivent satisfaire la condition de Courant-Friedrichs-Levy.

L'approximation $[DV^n]$ est obtenue en mettant en œuvre le procédé « Ultra Bee ». Alternativement, l'approximation $[DV^n]$ peut être obtenue en utilisant des procédés par différences finies tel que les procédés ENO, WENO, Upwind, par des procédés semi-Lagrangien.

La fonction temps minimum T est tout d'abord initialisée ainsi :

- pour tout $x_i \in C$, $T(x_i) = 0$;
- sinon, $T(x_i) = +\infty$.

Si pour un temps $t_n$ donné, la valeur de $V_i^n$ sur la cellule centrée autour $x_i$ de la grille G est proche de zéro et que $T(x_i)$ = $+\infty$, alors on pose $T(x_i) = t_n$, la valeur $T(x_i)$ ne pouvant plus être changée. On calcule alors la masse $m^*(x_i)$ au temps $t_n$, avec la formule ;

$$m(t) = \begin{cases} M_{PL} + M_{E2} + \beta_{E2}(t_f - t) \; pour \, t \in \left[ t_f - t_3, t_f \right] \\ M_{PL} + M_{E2} + \beta_{E2}t_3 + M_{E1} + \beta_{E1}(t_f - t_3 - t) pour \, t \in \left[ t_f - t_3 - t_2, t_f - t_3 \right] \\ M_{PL} + M_{E2} + \beta_{E2}t_3 + M_{E1} + \beta_{E1}t_2 + M_{EAP} + (\beta_{EAP} + \beta_{E1})(t_f - t_3 - t_2 - t) pour \, t \in \left[ 0, t_f - t_3 - t_2 \right] \end{cases}$$

Comme $T(x_i)$ correspond au temps minimum pour atteindre la cible C depuis le point $x_i$ en respectant les contraintes de contrôle, la masse $m^*(x_i)$ correspondante est la plus faible possible permettant d'atteindre la cible C.

Les fonction $\vartheta$ et $T$ étant connues, dans la cinquième étape 140 du procédé selon l'invention, la fonction de contrôle optimal $\alpha^*(t)$ est calculée ainsi que la trajectoire optimale. Dans cette étape, on reconstruit la trajectoire optimale en partant du point de départ, et on utilise par exemple un procédé Runge-Kutta du quatrième ordre pour calculer une suite de points approchant cette trajectoire. À chaque pas de la reconstruction, on choisit la valeur optimale de la commande qui permet de faire évoluer la trajectoire vers un nouveau point admissible à partir duquel il est possible d'atteindre la cible en temps minimal.

Cette fonction de contrôle optimale $\alpha^*(t)$ est appliquée sur le lanceur pour le piloter, soit en temps réel, soit en temps réfléchi.

En variante le domaine de calcul fin est restreint par un bornage supplémentaire artificiel des points (r, v, $\gamma$) appartenant à B, par exemple en utilisant deux fonctions $f_{min}$ et $f_{max}$ de sorte que :

$$f_{min}(r) \le v \le f_{max}(r)$$

De manière générale, le bornage supplémentaire artificiel des points (r, v, γ) appartenant à B peut être défini par un ensemble fini de q d'inéquations de type: h_1(r,v,γ)<=0 , .... h_q(r,v,γ)<=0, dans lequel f_i(r, v, γ) sont des fonctions des variables d'état r, v, γ pour i entier variant de 1 à q.

Cette limitation artificielle ne doit pas être en contradiction avec la contrainte mixte état/contrôle permettant de définir g et ayant pour origine des limitations physiques.

La limitation du domaine permet outre les économies de mémoire de calcul de diminuer également le temps de calcul.

Le procédé décrit ci-dessus est mis en œuvre à l'aide d'un ou plusieurs processeurs électroniques et d'une mémoire électronique dans laquelle sont implémentées les structures de données optimisées en termes de temps de calcul et de taille mémoire.

## Revendications

1. Procédé de contrôle optimal d'un lanceur spatial emportant une charge utile pour obtenir une trajectoire du lanceur optimale de sorte à atteindre une position orbitale donnée en minimisant une quantité de carburant utilisé et en respectant un certain nombre de contraintes, la trajectoire déterministe optimale y résolvant un problème P, le lanceur système pouvant être contrôlé par des commandes comprises dans un ensemble A, le comportement dynamique du lanceur système étant décrit par une fonction dynamique f, le problème P étant l'obtention d'une trajectoire physique déterministe optimale du lanceur atteignant une cible C en un temps minimal $t_f$ et vérifiant des contraintes décrites par une fonction de contrainte mixte état/contrôle g, le procédé comprenant :

   - une première étape (100) de transposition du problème P en équations d'Hamilton Jacobi Bellman reliant un nombre entier d de variables d'état et leurs adjoints respectifs, d étant la dimension d'un espace d'état du système ;
   - une deuxième étape (110) de résolution numérique des équations d'Hamilton Jacobi Bellman en les discrétisant par un procédé anti-diffusif, dit « ultrabee » sur des grilles spatiales et temporelles représentant l'espace d'état et le temps, **caractérisé en ce qu'**il comprend :
   - une troisième étape (120) d'implémentation des grilles par des structures de données creuses,
   - une quatrième étape (130) de calcul de la fonction de temps minimal,
   - une cinquième étape (140) où à partir des valeurs obtenues à la quatrième étape (130) est reconstruite une trajectoire optimale,

   les deuxième, troisième, quatrième et cinquième étapes étant mises en œuvre par un ordinateur.

2. Procédé selon la revendication 1, **caractérisé en ce que** les grilles sont incluses dans un domaine fini [0,T]×B avec T une borne supérieure du temps nécessaire pour atteindre la cible C et B un ensemble des points comprenant tout à la fois la cible C et la position initiale du système.

3. Procédé selon l'une quelconque des revendications 1 et 2, **caractérisé en ce que** la quatrième étape (130) est une étape de calcul simultané de la fonction de temps minimal et d'un bassin de capture.

4. Procédé selon l'une quelconque des revendications 1 à 3, **caractérisé en ce que** les grilles spatiales et/ou temporelles sont à pas variables.

5. Procédé selon l'une quelconque des revendications 1 à 4, **caractérisé en ce que** le pas temporel entre deux temps d'échantillonnage successifs diminue dans des zones de l'espace d'état où les variations de certaines variables d'état sont importantes-

6. Procédé selon l'une quelconque des revendications 1 à 5, **caractérisé en ce que** les pas spatiaux correspondant au maillage d'une grille de l'espace d'état sont uniformes indépendamment du temps, des changements de variable ayant été effectués au préalable sur au moins une variable d'état de manière à prendre en compte des différences d'échelles locales importantes pour certaines variables d'état considérées à des instant différents.

7. Procédé selon l'une quelconque des revendications 1 à 6, **caractérisée en ce que** les structures creuses sont des structures creuses à listes chaînées.

8. Procédé selon l'une quelconque des revendications 1 à 7, **caractérisé en ce que** les structures creuses à listes

chaînées sont des structures creuses à listes chaînées semi-dynamiques obtenues à partir d'une grille pleine (M) de dimension $N^d$, d étant la dimension d de l'espace d'état, et N le nombre d'échantillons sur un axe quelconque représentant une variable d'état, une structure creuse à listes chaînées semi-dynamique comprenant une matrice de dimension $N^{d-1}$ de pointeurs, chaque pointeur étant le début d'une liste de parcours de la dernière dimension restante de la matrice pleine (M), et contenant tous les noeuds entourant un front solution calculé à la deuxième étape (110).

9. Procédé selon l'une quelconque des revendications 1 à 8, **caractérisé en ce que** la dimension de l'espace des variables d'états est comprise entre 2 et 7, de préférence comprise entre 2 et 4.

10. Procédé selon l'une quelconque des revendications 1 à 9, dans lequel la trajectoire optimale et la fonction de contrôle optimale $\alpha^*(.)$ sont construites grâce à un procédé Runge-Kutta du quatrième ordre.

11. Procédé selon l'une quelconque des revendications 1 à 10,, **caractérisé en ce que** les variables d'état sont la distance r entre le centre gravité du lanceur et le centre de la Terre, v la vitesse relative du lanceur par rapport à un repère lié à la Terre, l'angle d'inclinaison $\gamma$ de la vitesse relative par rapport à une horizontale locale terrestre et la masse m.

12. Procédé selon les la revendication 11, **caractérisé en ce que** la fonction de contrainte mixte état/contrôle $g$ est déterminée à partir de la contrainte physique régie par f'équation :

$$Q(r,v)|\alpha| \le C_S$$

avec $Q(r,v) = \frac{1}{2}\rho(r)v^2$ , où $\rho$ est la fonction décrivant la densité atmosphérique en fonction de la distance r et $\alpha$ désigne un angle d'incidence formé par la direction du vecteur de vitesse relative v et le vecteur d'un axe longitudinal du lanceur.

13. Procédé selon la revendication 12 **caractérisé en ce que** le le domaine de calcul fini $[0,T]\times B$ est restreint par un bornage supplémentaire artificiel des points (r, v, $\gamma$) appartenant à B, en utilisant un ensemble fini d'un nombre entier q d'inéquations de type: h_1(r,v,$\gamma$)<=0 , .... h_q(r,v,$\gamma$)<=0, dans lequel f_i(r,v,$\gamma$) sont des fonctions des variables d'état r, v, $\gamma$ pour i entier variant de 1 à q.

14. Procédé selon l'une quelconque des revendications 11 à 13, caractérisé en qu'un front solution délimitant le bassin de capture est stocké dans une structure de donnée creuse à listes chaînées semi-dynamique.

## Patentansprüche

1. Verfahren zur optimalen Steuerung einer Trägerrakete, die eine Nutzlast befördert, um eine optimale Trajektorie der Trägerrakete zu erhalten, sodass eine gegebene Umlaufposition unter Minimierung einer verwendeten Treibstoffmenge und unter Einhaltung einer gewissen Anzahl von Nebenbedingungen erreicht wird, wobei die optimale deterministische Trajektorie $y$ ein Problem P löst, wobei die Systemträgerrakete über Befehle gesteuert werden kann, die in einer Menge A beinhaltet sind, wobei das dynamische Verhalten der Systemträgerrakete von einer dynamischen Funktion $f$ beschrieben wird, wobei das Problem P das Erhalten einer optimalen deterministischen physikalischen Trajektorie der Trägerrakete ist, die ein Ziel C in einer minimalen Zeit $t_f$ erreicht und Nebenbedingungen erfüllt, die von einer gemischten Zustands-/Steuerungs-Nebenbedingungsfunktion $g$ beschrieben werden, wobei das Verfahren beinhaltet:

- einen ersten Schritt (100) des Überführens des Problems P in Hamilton-Jacobi-Bellman-Gleichungen, die eine ganze Zahl <u>d</u> von Zustandsvariablen und ihre jeweiligen Adjungierten verknüpfen, wobei <u>d</u> die Größe eines Zustandsraums des Systems ist;
- einen zweiten Schritt (110) des numerischen Auflösens der Hamilton-Jacobi-Bellman-Gleichungen unter Diskretisieren derselben über ein "Ultrabee" genanntes anti-diffusives Verfahren an Raum- und Zeitgittern, die den Zustandsraum und die Zeit darstellen,

**dadurch gekennzeichnet, dass** es beinhaltet:

- einen dritten Schritt (120) des Implementierens der Gitter durch dünnbesetzte Datenstrukturen,
- einen vierten Schritt (130) des Berechnens der minimalen Zeitfunktion,
- einen fünften Schritt (140), bei dem auf Grundlage der im vierten Schritt (130) erhaltenen Werte eine optimale Trajektorie rekonstruiert wird,

wobei der zweite, dritte, vierte und fünfte Schritt von einem Computer umgesetzt werden.

2. Verfahren nach Anspruch 1, **dadurch gekennzeichnet, dass** die Gitter in einem endlichen Bereich $[0,T] \times B$ eingeschlossen sind, wobei T eine obere Grenze der Zeit ist, die erforderlich ist, um das Ziel C zu erreichen, und B eine Menge der Punkte ist, die gleichzeitig das Ziel C und die Ausgangsposition des Systems beinhalten.

3. Verfahren nach einem der Ansprüche 1 und 2, **dadurch gekennzeichnet, dass** der vierte Schritt (130) ein Schritt des gleichzeitigen Berechnens der minimalen Zeitfunktion und eines Auffangbeckens ist.

4. Verfahren nach einem der Ansprüche 1 bis 3, **dadurch gekennzeichnet, dass** die Raum- und/oder Zeitgitter variable Teilungen aufweisen.

5. Verfahren nach einem der Ansprüche 1 bis 4, **dadurch gekennzeichnet, dass** die Zeitteilung zwischen zwei aufeinanderfolgenden Abtastzeiten in Zonen des Zustandsraums, in denen die Variationen gewisser Zustandsvariablen signifikant sind, kleiner wird.

6. Verfahren nach einem der Ansprüche 1 bis 5, **dadurch gekennzeichnet, dass** die Raumteilungen, die dem Netz eines Gitters des Zustandsraums entsprechen, unabhängig von der Zeit gleichmäßig sind, wobei zuvor an mindestens einer Zustandsvariable Variablenänderungen vorgenommen wurden, um signifikante lokale Skalenunterschiede für gewisse Zustandsvariablen, die zu unterschiedlichen Zeitpunkten betrachtet werden, zu berücksichtigen.

7. Verfahren nach einem der Ansprüche 1 bis 6, **dadurch gekennzeichnet, dass** die dünnbesetzten Strukturen dünnbesetzte Strukturen mit verketteten Listen sind.

8. Verfahren nach einem der Ansprüche 1 bis 7, **dadurch gekennzeichnet, dass** die dünnbesetzten Strukturen mit verketteten Listen halbdynamische dünnbesetzte Strukturen mit verketteten Listen sind, die auf Grundlage eines vollbesetzten Gitters (M) der Größe $N^d$ erhalten werden, wobei d die Größe d des Zustandsraums ist und N die Anzahl von Abtastungen auf einer beliebigen Achse, die eine Zustandsvariable darstellt, wobei eine halbdynamische dünnbesetzte Struktur mit verketteten Listen eine Zeigermatrix der Größe $N^{d-1}$ beinhaltet, wobei jeder Zeiger der Anfang einer Liste von Strecken der letzten verbleibenden Größe ist, die von der vollbesetzten Matrix (M) verbleibt und alle die Knoten enthält, die eine im zweiten Schritt (110) berechnete Lösungsfront umgeben.

9. Verfahren nach einem der Ansprüche 1 bis 8, **dadurch gekennzeichnet, dass** die Größe des Raums der Zustandsvariablen zwischen 2 und 7, vorzugsweise zwischen 2 und 4 liegt.

10. Verfahren nach einem der Ansprüche 1 bis 9, wobei die optimale Trajektorie und die optimale Steuerfunktion $\alpha^*(.)$ mithilfe eines Runge-Kutta-Verfahrens vierter Ordnung konstruiert werden.

11. Verfahren nach einem der Ansprüche 1 bis 10, **dadurch gekennzeichnet, dass** die Zustandsvariablen der Abstand r zwischen dem Schwerpunkt der Trägerrakete und dem Mittelpunkt der Erde, die relative Geschwindigkeit v der Trägerrakete in Bezug auf einen mit der Erde verbundenen Bezugspunkt, der Neigungswinkel $\gamma$ der relativen Geschwindigkeit in Bezug auf eine lokale terrestrische Horizontale und die Masse m sind.

12. Verfahren nach Anspruch 11, **dadurch gekennzeichnet, dass** die gemischten Zustands-/Steuerungs-Nebenbedingungsfunktion $g$ auf Grundlage der physikalischen Nebenbedingung bestimmt wird, für die die Gleichung:

$$Q(r,v)|\alpha| \leq C_S$$

$$Q(r, v) = \frac{1}{2}\rho(r)v^2$$

gilt, wobei ' , wobei $\rho$ die Funktion ist, die die Luftdichte in Abhängigkeit vom Abstand r beschreibt, und $\alpha$ einen Einfallswinkel bezeichnet, der von der Richtung des Vektors der relativen Geschwindigkeit v und dem Vektor einer Längsachse der Trägerrakete gebildet wird.

13. Verfahren nach Anspruch 12, **dadurch gekennzeichnet, dass** der endliche Rechenbereich $[0,T]\times B$ durch eine zusätzliche künstliche Begrenzung der zu B gehörenden Punkte (r, v, $\gamma$) unter Verwendung einer endlichen Menge einer ganzen Zahl q von Ungleichungen des Typs: h_1(r,v,$\gamma$)<=0, ... , h_q(r,v,$\gamma$)<=0 eingeschränkt wird, wobei f_i(r,v,$\gamma$) Funktionen der Zustandsvariablen r, v, $\gamma$ für eine ganze Zahl i sind, die von 1 bis q variiert.

14. Verfahren nach einem der Ansprüche 11 bis 13, **dadurch gekennzeichnet, dass** eine Lösungsfront, die das Auffangbecken begrenzt, in einer halbdynamischen dünnbesetzten Datenstruktur mit verketteten Listen gespeichert wird.

## Claims

1. A method of optimal control of a space launcher carrying a payload to obtain an optimal trajectory of the launcher so as to reach a determined orbital position by minimizing an amount of used fuel and by meeting a certain number of constraints, the optimal deterministic trajectory $\gamma$ solving a problem P, the system launcher being able to be controlled by commands comprised in a set A, the dynamic behavior of the system launcher being described by a dynamic function $f$, the problem P being the obtainment of an optimal deterministic physical trajectory of the launcher reaching a target C in a minimum time $t_f$ and addressing constraints described by a mixed state/control constraint function $g$, the method comprising:

   - a first step (100) of transposing the problem P into Hamilton Jacobi Bellman equations relating an integer number $\underline{d}$ of state variables and their respective adjoints, $\underline{d}$ being the dimension of a state space of the system;
   - a second step (110) of numerical resolution of the Hamilton Jacobi Bellman equations by discretizing them by an anti-diffusive method, called «ultrabee» on spatial and temporal grids representing the state space and time,

   **characterized in that** it comprises:

   - a third step (120) of implementing grids by hollow data structures,
   - a fourth step (130) of calculating the minimum time function,
   - a fifth step (140) where an optimal trajectory is reconstructed from the values obtained at the fourth step (130),

   the second, third, fourth and fifth steps being implemented by a computer.

2. The control method according to claim 1, **characterized in that** the grids are included in a finite domain [0, T] xB with T an upper limit of the time necessary to reach the target C and B a set of points comprising both the target C and the initial position of the system.

3. The control method according to any one of claims 1 and 2, **characterized in that** the fourth step (130) is a step of simultaneous calculation of the minimum time function and of a catch basin.

4. The control method according to any one of claims 1 to 3, **characterized in that** the spatial and/or temporal grids have variable steps.

5. The control method according to any one of claims 1 to 4, **characterized in that** the temporal step between two successive sampling times decreases in areas of the state space where the variations of some state variables are significant.

6. The control method according to any one of claims 1 to 5, **characterized in that** the spatial steps corresponding to the meshing of a grid of the state space are uniform independently of the time, changes of variable having been made beforehand on at least one state variable so as to take into account significant local scale differences for some state variables considered at different times.

7.  The control method according to any one of claims 1 to 6, **characterized in that** the hollow structures are chained-list hollow structures.

8.  The control method according to any one of claims 1 to 7, **characterized in that** the chained-list hollow structures are semi-dynamic chained-list hollow structures obtained from a solid grid (M) of a dimension $N^d$, d being the dimension d of the state space, and N the number of samples on any axis representing a state variable, a semi-dynamic chained-list hollow structure comprising a matrix of dimension $N^{d-1}$ of pointers, each pointer being the beginning of a list of paths of the last remaining dimension of the full matrix (M), and containing all the nodes surrounding a solution front calculated at the second step (110).

9.  The control method according to any one of claims 1 to 8, **characterized in that** the dimension of the space of the state variables is comprised between 2 and 7, preferably comprised between 2 and 4.

10. The control method according to any one of claims 1 to 9, wherein the optimal trajectory and the optimal control function $\alpha^*(.)$ are constructed thanks to a fourth-order Runge-Kutta method.

11. The control method according to any one of claims 1 to 10, **characterized in that** your state variables are the distance r between the center of gravity of the launcher and the center of the Earth, v the relative speed of the launcher relative to a reference linked to the Earth, the angle of inclination $\gamma$ of the relative speed with respect to a terrestrial local horizontal and the mass m.

12. The control method according to claim 11, **characterized in that** the mixed state/control constraint function $g$ is determined from the physical constraint governed by the equation:

$$Q\,(r,\,v)\,|\alpha| \leq C_s$$

with $Q\,(r,\,v) = \tfrac{1}{2}\,\rho(r)\,v^2$ where $\rho$ is the function describing the atmospheric density as a function of the distance r and $\alpha$ denotes an angle of incidence formed by the direction of the relative speed vector v and the vector of a longitudinal axis of the launcher.

13. The control method according to claim 12, **characterized in that** the finite calculation domain [0, T] xB is restricted by an additional artificial boundary of the points (r, v, $\gamma$) belonging to B, by using a finite set with an integer number q of inequalities of the type: h_1 (r, v, $\gamma$) <=0, .... h_q(r, v, $\gamma$) <=0, in which f_i (r, v, $\gamma$) are functions of the state variables r, v, $\gamma$ for the integer i varying from 1 to q.

14. The control method according to any one of claims 11 to 13, **characterized in that** a solution front delimiting the catch basin is stored in a semi-dynamic chained-list hollow data structure.

(P)

↓

| Transposition HJB | ⌒100 |

↓

| Résolution numérique | ⌒110 |

↓

| Implémentation des grilles en structures creuses | ⌒120 |

↓

| Calcul de la fonction de temps minimal | ⌒130 |

↓

| Construction fonction de contrôle | ⌒140 |

↓

$\alpha^*(t)$

## FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C.L. NAVASCA ; A.J. KRENER.** Solution of Hamilton Jacobi Bellman Equations. *Proceedings of tte 39th IEEE, Conférence on décision and control*
- **O. BOKANOWSKI ; H. ZIDANI.** Anti-diffusive schemes for linear advection and application to Hamilton-Jacobi-Bellman équations. *Journal Scientific Computing,* 2007, vol. 30 (1), 1-33
- **O. BOKANOWSKI ; S. MARTIN ; R. MUNOS ; H. ZIDANI.** An anti-diffusive scheme for viability problems. *Applied Numer Math,* 2006, vol. 56 (9), 1147-1162
- **CRISTIANI E et al.** An efficient data structure to solve front propagation problems and its application to the climbing problem. *Seminario di Modellistica Differenziale Numerica,* 20 Mai 2008
- **M. BARDI ; I. CAPUZZO-DOLCETTA.** Optimal Control and viscosity solutions of Hamilton-Jacobi-Bellman équations. *Birkhäuser Boston,* 1997
- structure creuse semi-dynamique. *Sparse Semi-Dynamic data structure*